# EUROPEAN PATENT SPECIFICATION

(11) **EP 0 774 587 B1**
(45) Date of publication and mention of the grant of the patent: **28.02.2001**
(21) Application number: 96308336.5
(22) Date of filing: 18.11.1996
(51) Int. Cl.: F16B 11/00, F16B 5/02

(54) **A connection for connecting elements**
Verbindungselement
Dispositif de fixation

(30) Priority: 16.11.1995 GB 9523381
(43) Date of publication of application: 21.05.1997
(73) Proprietor: Ainscow, George William, Sanderstead, Surrey CR2 0RS (GB)
(72) Inventor: Ainscow, George William, Sanderstead, Surrey CR2 0RS (GB)
(74) Representative: Adams, William Gordon

(56) References cited:
- DE-A- 3 439 986
- DE-A- 4 126 009
- US-A- 4 932 805

## Description

The present invention relates to a connection for connecting elements together in a stable relationship after the possibility of initial lateral adjustment.

The invention is applicable to structural applications where for instance two steel elements are joined and connected by a bolt or bolts at a splice or at a beam end or else between a beam and a concrete element.

Normally in structural applications such connections are deemed to be satisfactory if the bolt in question passes through a 2mm oversize hole, on the basis that the bedding down of connections with this amount of tolerance will not unduly distort the structure itself or affect its overall behaviour.

However, it is difficult to measure and drill one-off elements, such as beams, with sufficient accuracy to meet such criteria. The provision of known slotted hole connections cannot be used when the load between elements to be connected applies in the direction of the slot because of the likelihood of excessive movement between the elements. DE-A-3439986 upon which the preambles of claims 1 and 7 are based shows an arrangement where a bolt is modified by drilling axial and radial holes through which gap filling material may be pumped. This arrangement would weaken the bolt, be expensive to produce and is inflexible if different fixing means were to be required.

According to the invention there is provided a connection for connecting elements comprising a first said element, at least a second said element for connection to the first element and a fixing means extending from one said element through at least an aperture in the other said element, the fixing means having a smaller cross section than that of the aperture where it passes through the aperture, so as to leave a gap in the aperture, and a gap filling material filling in the gap, the or each said aperture allowing adjustment between the elements before insertion of the gap filling material, characterised in that at least one closure member is provided having a first hole to receive the fixing means and a second hole arranged to convey the gap filling material from the exterior of the connection into the gap, the closure member being such as to cover at least a part of the gap.

The gap filling material may be any setting fluid such a settable resin or material with a low melting point such as will flow into the gap and set therein such as to resist any precalculated lateral displacement forces between the elements.

The fixing means may be a stud fixed to one element with an associated nut or else a bolt extending through both elements or even a further element with the elements secured together by a nut on the bolt. Alternatively, the fixing means may comprise a pin and cotter.
The closure member is preferably a plate or washer at least large enough to cover the aperture in the other said element in any adjusted position of the fixing means in the aperture.
In a case where there are three said elements to be connected together either two of the elements may be apertured with means to fill the gap either side of the joint, or alternatively a centre of the elements is apertured sufficiently for adjustment of connection with space in one or both elements to force gap filling material from one or both side of the connection.

In a further aspect of the invention a method of connecting elements together comprises providing at least elements to be connected, and a fixing means extending from one element through at least an aperture in the other element, the fixing means having a smaller cross section than that of the aperture where it is passed through the aperture so as to leave a gap in the aperture, adjusting the elements laterally and filling the gap with a gap filling material to stabilise the adjustment, characterised in that at least one closure member is provided having a first hole to receive the fixing means and a second hole arranged to convey the gap filling material from the exterior of the connection into the gap, the closure member being such as to cover at least a part of the gap.

Embodiments of the invention will now be described by way of example with reference to the accompanying drawings in which:-
Figure 1 is side elevation partially in a central cross section indicated at A-A in Fig. 3 of a first embodiment of the connection according to the invention;
Figure 2 is a front elevation of the connection of Fig. 1 partially in a central cross section indicated at B-B in Fig. 3;
Figure 3 is a plan view and cross section of the washer or closure member of the connection of fig. 1 taken on C-C or Fig. 1.;
Figures 4 to 6 are similar view to Fig. 1 to 3 of a second embodiment of the connection and washer or closure member, fig. 4 being taken on DD of Fig. 6, Fig. 5 being taken on EE of Fig. 6 and Fig. 6 being taken on FF of Fig. 4;.
Figures 7 and 8 are similar views to Figs. 1 and 2 but for a third embodiment of the connection as taken on GG and HH of Figs. 9 and 10;
Figures 9 and 10 are similar views to Fig. 3 but for the third embodiment Fig. 9 being taken on JJ of Fig. 7 and Fig. 10 being taken on KK of Fig. 7.

Figures 11 to 14 are similar views to Figs. 7 to 10 but for a fourth embodiment Fig. 11 being taken on LL of Fig. 13, Fig. 12 being taken on MM of Fig. 13, Fig. 13 being taken on NN of Fig. 11 and Fig. 14 being taken on PP of Fig. 11.

Figure 15 is a similar view to Fig. 1 but for a fifth embodiment which is the same as the first embodiment and uses the washer of Fig. 3 but where the bolted connection is replaced by a studded connection.

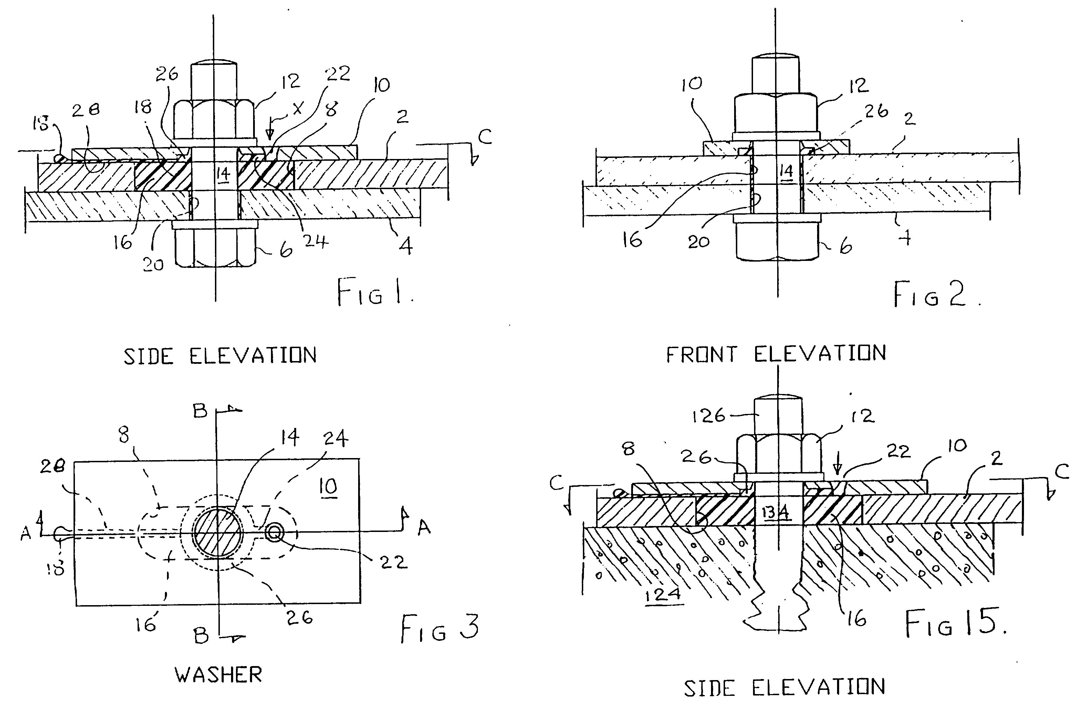

Turning to Figures 1 to 3 and the first embodiment shown therein, the connection generally shown in Figures 1 and 2 is a two ply shear connection connecting two elements 2 and 4 which are generally plates but which may be flanges of beams. A fixing means in this case a bolt 6 extends from element 4 through an aperture 8 in element 2 and through a closure member or washer 10 and is secured by a nut 12. The bolt 6 has a shank 14 of a smaller cross sectional area than that of the aperture so as to leave a gap 16 which is filled with a gap filling material 18 as will be described below.

The aperture 8 is elongate so as to provide lateral adjustment of element 2 relative to the bolt 6 which is laterally immobile in hole 20 in element 4, hole 20 is of a corresponding size to shank 14 of bolt 6.

Washer 10 has a hole 22 in its upper face which communicates with a lateral radial groove 24 which in turn communicates with an annular chamber 26 formed in the underside of the washer. Chamber 26 is in communication with gap 16 of aperture 8 so that when the gap filling material is forced through hole 22 in direction X it fills gap 16 and exudes out of a groove 28 forming a vent in washer 10.

The gap filling material 18 is preferably a resin which is supplied in a two part form so that it sets in the gap 16 and other spaces within the connection. The resin is inserted through the hole 22 after elements 2 and 4 have been correctly aligned and after the bolt and nut 6 and 12 have been tightened to fix the relative lateral position of elements 2 and 4. When the resin is set there is no possibility for any substantial relative lateral movement of the elements.

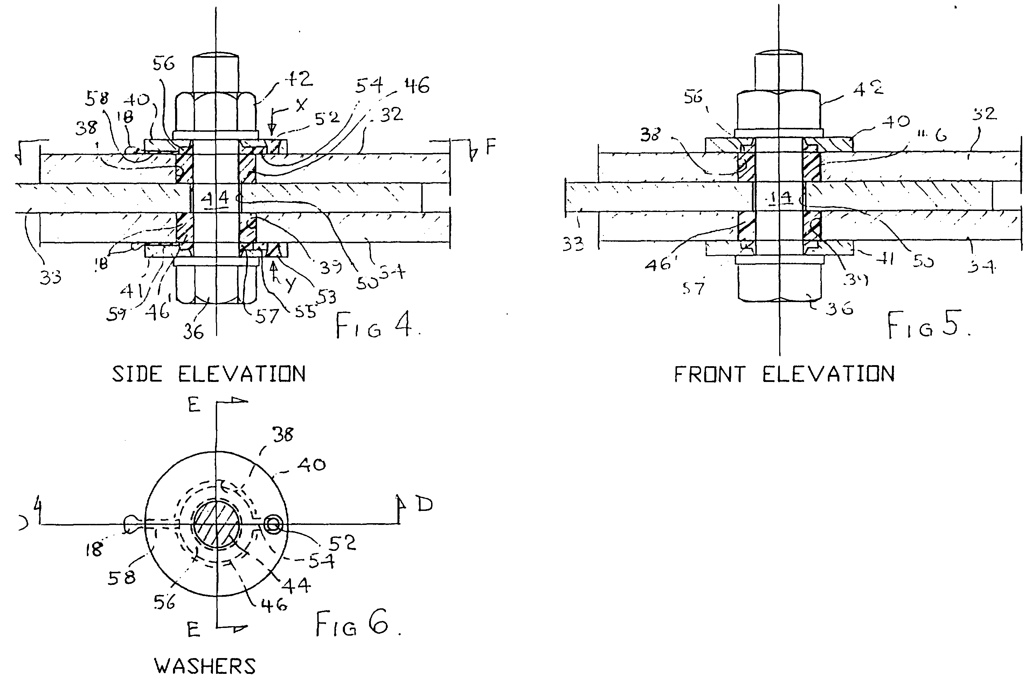

In the second embodiment shown in Figures 4 to 6 the connection connects three elements 32, 33 and 34. The fixing means is again a bolt 36 which extends through a closure member or washer 41, aperture 39 in element 34, element 33, hole 50 in element 33, aperture 38 in element 32 and closure member or washer 40 to be secured by nut 42. Closure member 40 which is circular is shown in Fig. 6 and is the same as closure member 41 shown in cross section in Figs. 4 and 5. Bolt 36 has a shank 44 of a smaller cross sectional area than that of the apertures 38 and 39 which are circular so as to provide lateral adjustment of elements 32 and 34 relative to the bolt 36 which is laterally immobile in hole 50 in element 33.

Closure members 40 and 41 have holes 52 and 53 respectively in their respective upper and lower faces which communicate with respective radial grooves 54 and 55 which in turn communicate with respective annular chambers 56 and 57 formed in the respective under and top sides of the members 40 and 41. Chambers 56 and 57 are respectively in communication with respective annular gaps 46 and 46' of apertures 38 and 39 so that when gap filling material 18 is forced through holes 52 and 53 in respective directions X and Y it fills gaps 46 and 46' and exudes respectively out of vent grooves 58 and 59 in members 40 and 41.

The operation of the second embodiment is similar to that of the first embodiment except that there is possible relative lateral alignment between the elements in any direction.

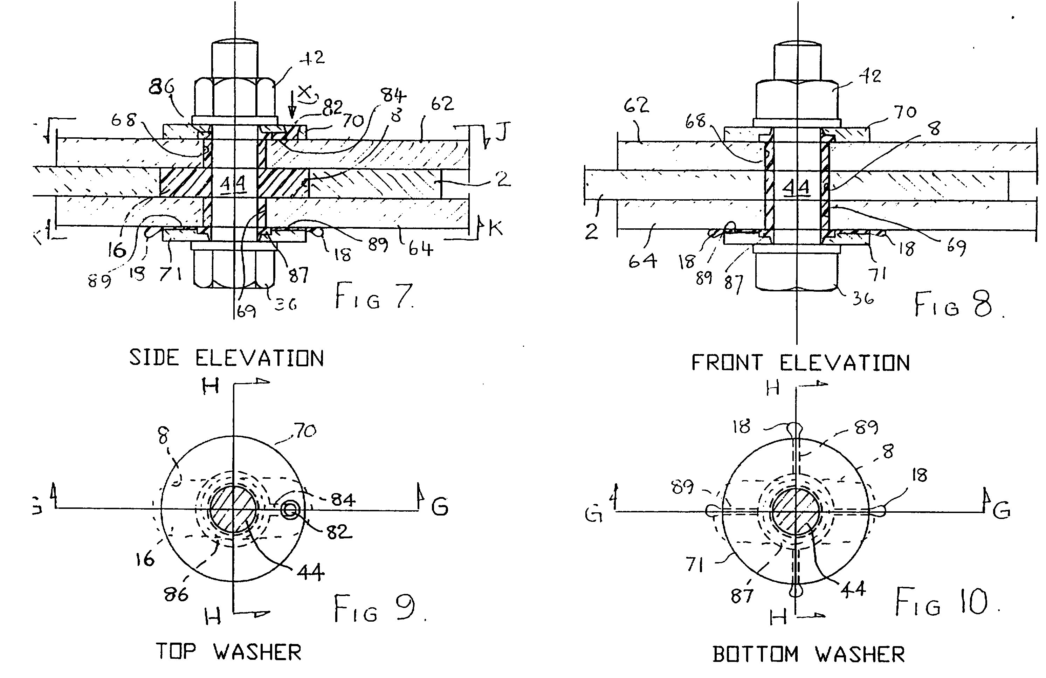

In the third embodiment shown in Figures 7 to 10 the connection again connects three elements 62, 2 and 64. Element 2 is formed the same as in the first embodiment with an elongate aperture 8. Elements 62 and 64 have circular apertures 68 and 69 larger the shank 44 of bolt 36 but smaller than apertures 38 and 39 of the second embodiment so that the gap filling material 18 can be forced from hole 82 of closure member 70 through groove 84 into annular chamber 86, thence through apertures 68, 8 and 69 to annular chamber 87 of closure member 71. Material 18 finally exudes from vent grooves 89 indicating the apertures are full. Closure member 70 is similar to that of the second embodiment but without a vent groove. Member 71 is similar but with four vent grooves 89.

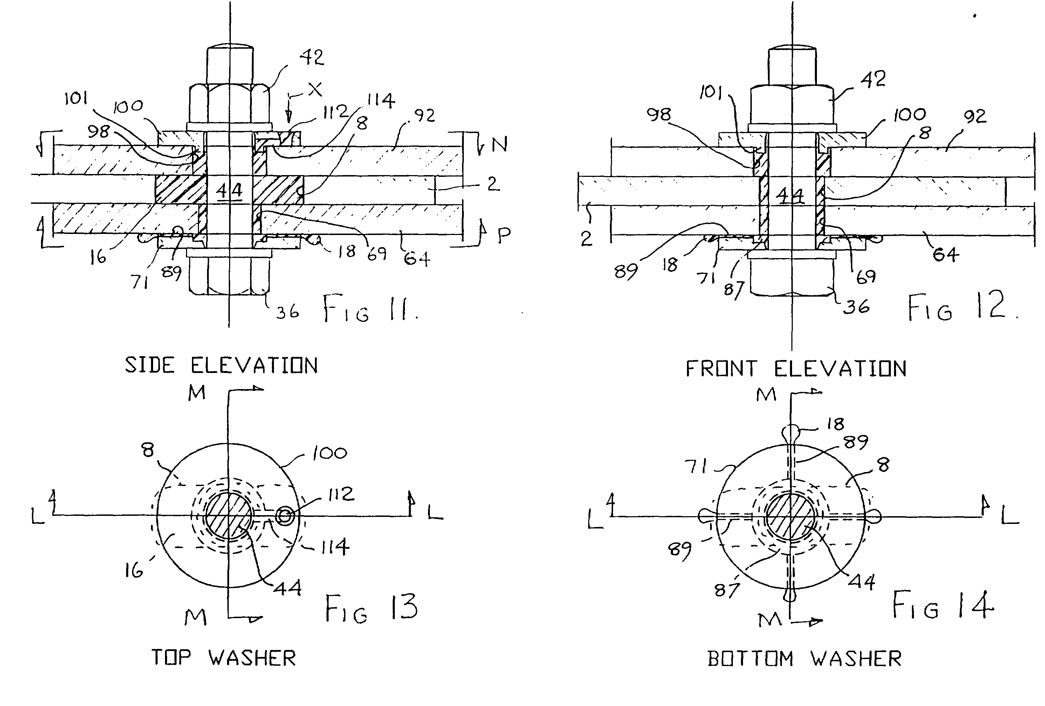

In the fourth embodiment shown in Figures 11 to 14 the connection once again connects three elements 92, 2 and 64. Element 2 is again formed the same as in the first embodiment. Element 64 is formed the same as in the third embodiment. Element 92 is bored to form circular aperture 98 slightly smaller than aperture 38 of the second aperture so as to receive annular extension 101 of closure member 100 which with hole 112 and groove 114 is otherwise the same as closure member 70 of the third embodiment. Closure member 71 is the same as in the third embodiment. The annular extension 101 of member 100 assists the penetration of material 18 into apertures 98, 16 and 69 as it is forced from hole 112 through the apertures to the vent grooves 89.

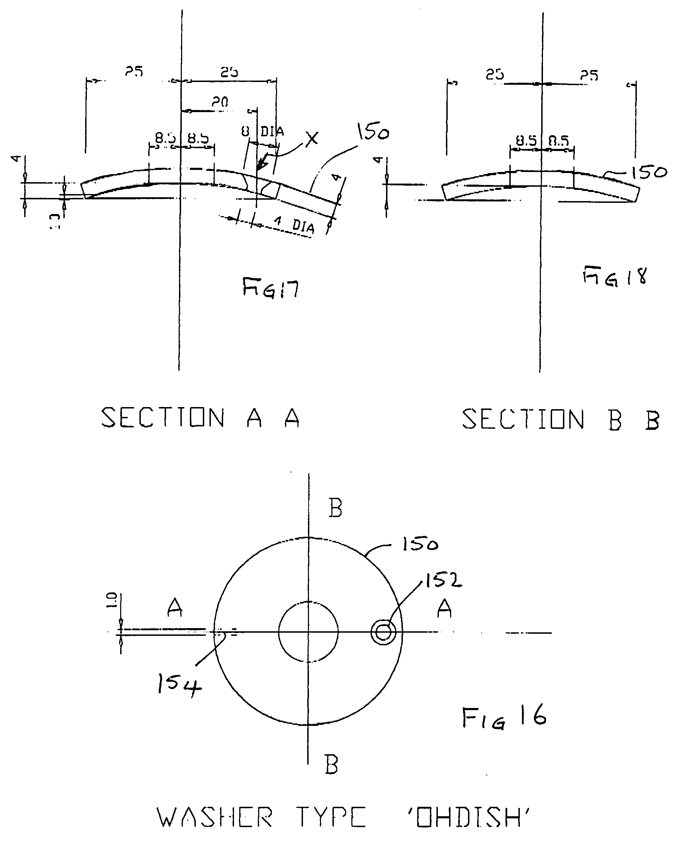

The fifth embodiment shown in Figure 15 is the same as the first embodiment except element 2 is connected to element 125 which is concrete by a ragbolt or stud 126 with shank 134 the same as shank 14 of bolt 2.

The closure members or washers 10, 40, 41, 70, 71 and 100 can be formed of a robust plastics material though steel or aluminium could be used. Although filling holes 22 etc. are preferably provided so that the connection can be tightened in an adjusted position before securing that position by inserting the gap filling material, it is possible, but not so advantageous, not to provide a hole, and where there are only two elements for connection, to insert the gap filling material into gap 16 before placing washer 10 onto the bolt 6. The gap filling material 18 although preferably of a suitable resin can be possibly of a low melting point metal or metal alloy.

The closure members so far described are of generally planar material. Figures 16 to 18 show a further embodiment of a closure member 150 having a slightly domed configuration. The closure member 150 has an aperture 152 through which a gap filling material can be forced in the direction X after it has been fixed in position in relation to the other elements of the connection, such as elements 2, 4, bolt 6 and nut 12 in the case of the first embodiment.

The member 150 can also be provided with a groove 154 in its lower, peripheral surface (in the drawing) so that material forced through aperture 152 can fill the gap as aforementioned and some can exude out of groove 154.

The advantage of the embodiments shown is that adjustment between the elements can be accurately achieved before securing in place by the forcing of the solidifying gap filling material into the apertures.

## Claims

1. A connection for connecting elements comprising a first said element (2), at least a second said element (4) for connection to the first element and a fixing means (14) extending from one said element (4) through at least an aperture (8) in the other said element (2), the fixing means having a smaller cross section than that of the aperture where it passes through the aperture, so as to leave a gap (16) in the aperture, and a gap filling material (8) filling in the gap, the or each said aperture allowing adjustment between the elements before insertion of the gap filling material, characterised in that at least one closure member (16) is provided having a first hole (26) to receive the fixing means and a second hole (22) arranged to convey the gap filling material from the exterior of the connection into the gap, the closure member being such as to cover at least a part of the gap.

2. A connection according to claim 1 wherein the gap filling material is a settable resin.

3. A connection according to claim 1 wherein the gap filling material is a low melting point material.

4. A connection according to any one of claims 1 to 3 wherein the fixing means is a stud and nut, nut (12) and bolt (14), rag bolt (134) and nut (12) or pin and cotter.

5. A connection according to any one of claims 1 to 4 wherein a third said element (33) is provided through which the fixing means is arranged to pass.

6. A connection as claimed in claim 5 wherein either two of the elements (32, 34) either side of a further said element (33) are apertured to receive the gap filling material or a said element between two other said elements is apertured to receive the gap filling material.

7. A method of connecting elements together comprising providing at least elements (2, 4) to be connected, and a fixing means (14) extending from one element through at least an aperture (8) in the other element (2), the fixing means having a smaller cross section than that of the aperture where it is passed through the aperture so as to leave a gap (16) in the aperture, adjusting the elements laterally and filling the gap with a settable gap filling material to stabilise the adjustment, characterised in that at least one closure member (10) is provided having a first hole (26) to receive the fixing means and a second hole (22) arranged to convey the gap filling material from the exterior of the connection into the gap, the closure member being such as to cover at least a part of the gap.

## Patentansprüche

1. Eine Verbindung für Verbindungselemente, aufweisend: ein erstes Element (2), wenigstens ein zweites Element (4) zum Verbinden mit dem ersten Element und eine Befestigungseinrichtung (14), die sich von einem genannten Element (4) durch wenigstens eine Öffnung (8) in dem anderen genannten Element (2) erstreckt, wobei die Befestigungseinrichtung einen kleineren Querschnitt als die Öffnung aufweist, wo sie durch die Öffnung hindurchgeht, um einen Spalt (16) in der Öffnung zu lassen, und wobei ein Spaltfüllmaterial (8) in den Spalt gefüllt ist und wobei sie oder jede Öffnung eine Einstellung zwischen den Elementen vor dem Einbringen des Spaltfüllmaterials erlaubt,
dadurch gekennzeichnet, daß wenigstens ein Verschlußelement (16) vorgesehen ist, das ein erstes Loch (26) zur Aufnahme der Befestigungseinrichtung und ein zweites Loch (22), angeordnet zum Befördern des Spaltfüllmaterials von dem Äußeren der Verbindung in den Spalt, aufweist, wobei das Verschlußelement so ausgebildet ist, um wenigstens einen Teil des Spalts zu bedecken.

2. Eine Verbindung nach Anspruch 1, bei welcher das Spaltfüllmaterial ein aushärtbares Harz ist.

3. Eine Verbindung nach Anspruch 1, bei welcher das Spaltfüllmaterial ein Material mit niedrigem Schmelzpunkt ist.

4. Eine Verbindung nach einem der Ansprüche 1 bis 3, bei welcher die Befestigungseinrichtung ist: Stehbolzen und Mutter, Schraubbolzen (14) und Mutter (12), Selbstverankerungsbolzen (134) und Mutter (12), oder Bolzen und Splint.

5. Eine Verbindung nach einem der Ansprüche 1 bis 4, bei welcher ein drittes Element (33) vorgesehen ist, durch das hindurchgehend die Befestigungseinrichtung angeordnet ist.

6. Eine Verbindung, wie in Anspruch 5 beansprucht, bei welcher entweder zwei der Elemente (32, 34) beidseits eines weiteren genannten Elements (33) mit Öffnungen versehen sind, um das Spaltfüllmaterial aufzunehmen, oder ein genanntes Element zwischen zwei anderen genannten Elementen mit einer Öffnung versehen ist, um das Spaltfüllmaterial aufzunehmen.

7. Ein Verfahren zum Verbinden von Elementen miteinander, aufweisend: Vorsehen von wenigstens Elementen (2, 4), die zu verbinden sind, und einer Befestigungseinrichtung (14), die sich von einem Element durch wenigstens eine Öffnung (8) in dem anderen Element (2) erstreckt, wobei die Befestigungseinrichtung einen kleineren Querschnitt als die Öffnung aufweist, wo sie durch die Öffnung hindurchgeführt ist, so daß ein Spalt (16) in der Öffnung gelassen wird, Einstellung der Elemente in seitlicher Richtung und Füllen des Spalts mit einem aushärtbaren Spaltfüllmaterial, um die Einstellung zu stabilisieren, dadurch gekennzeichnet, daß wenigstens ein Verschlußelement (10) vorgesehen wird, das ein erstes Loch (26) zur Aufnahme der Befestigungseinrichtung und ein zweites Loch (22), angeordnet zum Befördern des Spaltfüllmaterials von dem Äußeren der Verbindung in den Spalt, aufweist, wobei das Verschlußelement so ausgebildet ist, um wenigstens einen Teil des Spalts zu bedecken.

## Revendications

1. Connexion pour connecter des éléments comprenant un premier (2) desdits éléments, au moins un deuxième (4) desdits éléments destiné à être connecté au premier élément et des moyens de fixation (14), s'étendant depuis un (4) desdits éléments à travers au moins une ouverture (8) dans l'autre (2) desdits éléments, les moyens de fixation ayant une section transversale plus petite que celle de l'ouverture à l'endroit où ils passent à travers l'ouverture, de façon à laisser un intervalle (16) dans l'ouverture, un matériau de remplissage d'intervalle (8) remplissant l'intervalle, ladite ouverture ou chaque ouverture permettant l'ajustement entre les éléments avant l'insertion du matériau de remplissage d'intervalle, **caractérisée en ce qu**'au moins un organe de fermeture (16) est prévu ayant un premier trou (26) pour recevoir les moyens de fixation et un deuxième trou (22) disposé pour amener le matériau de remplissage d'intervalle, depuis l'extérieur de la connexion, jusque dans l'intervalle, l'organe de fermeture étant tel qu'il recouvre au moins une partie de l'intervalle.

2. Connexion selon la revendication 1, **caractérisée en ce que** le matériau de remplissage d'intervalle est une résine durcissable.

3. Connexion selon la revendication 1, **caractérisée en ce que** le matériau de remplissage d'intervalle est un matériau à bas point de fusion.

4. Connexion selon une quelconque des revendications 1 à 3, **caractérisée en ce que** les moyens de fixation sont un goujon et un écrou, un écrou (12) et un boulon (14), un boulon de scellement (134) et un écrou (12) ou une broche et une goupille.

5. Connexion selon une quelconque des revendications 1 à 4, **caractérisée en ce qu**'un troisième (33) desdits éléments est prévu à travers lequel les moyens de fixation sont destinés à passer.

6. Connexion selon la revendication 5, **caractérisée en ce que**, soit deux des éléments (32, 34), de chaque côté d'un autre (33) desdits éléments, sont munis d'une ouverture pour recevoir le matériau de remplissage d'intervalle, soit un desdits éléments entre les deux autres desdits éléments est muni d'une ouverture pour recevoir le matériau de remplissage d'intervalle.

7. Procédé pour connecter ensemble des éléments, comprenant les étapes consistant à prévoir au moins les éléments (2, 4) à connecter et des moyens de fixation (14) s'étendant à partir d'un élément à travers au moins une ouverture (8) dans l'autre élément (2), les moyens de fixation ayant une section transversale plus petite que celle de l'ouverture, à l'endroit où ils passent à travers l'ouverture, de façon à laisser un intervalle (16) dans l'ouverture, ajuster les éléments latéralement et remplir l'intervalle avec un matériau durcissable de remplissage d'intervalle afin de stabiliser l'ajustement, **caractérisé en ce qu'**au moins un organe de fermeture (10) est prévu, ayant un premier trou (26) pour recevoir les moyens de fixation et un deuxième trou (22) disposé pour amener le matériau de remplissage d'intervalle, depuis l'extérieur de la connexion, jusque dans l'intervalle, l'organe de fermeture étant tel qu'il recouvre au moins une partie de l'intervalle.
